# EUROPÄISCHE PATENTSCHRIFT

(11) **EP 0 810 065 B1**
(45) Veröffentlichungstag und Bekanntmachung des Hinweises auf die Patenterteilung: **26.01.2000**
(21) Anmeldenummer: 97108641.8
(22) Anmeldetag: 28.05.1997
(51) Int. Cl.: B24B 7/22, B24B 21/04

(54) **Ziegel-Schleifvorrichtung für die Herstellung von Planziegeln**
Brick grinding apparatus for manufacturing sized bricks
Dispositif de meulage de briques pour la fabrication de briques calibrées

(30) Priorität: 30.05.1996 DE 19621690; 30.05.1996 DE 29609533 U
(43) Veröffentlichungstag der Anmeldung: 03.12.1997
(73) Patentinhaber: FALLER, Alexander, jun., 84061 Ergoldsbach (DE); Merk, Fritz, 84061 Ergoldsbach (DE)
(72) Erfinder: FALLER, Alexander, jun., 84061 Ergoldsbach (DE); Merk, Fritz, 84061 Ergoldsbach (DE)
(74) Vertreter: Patentanwälte Dr. Solf & Zapf

(56) Entgegenhaltungen:
- WO-A-96/11083
- US-A- 3 603 041
- US-A- 4 256 078

## Beschreibung

Die Erfindung betrifft eine Ziegel-Schleifvorrichtung für die Herstellung von Planziegeln.

Bandschleifvorrichtungen zum Schleifen von Steingut sind beispielsweise aus der DE-OS 19 10 223 oder dem DE-GM 70 15 980 bekannt. Aus der DE 38 43 379 C2 geht auch hervor, daß es bekannt sei, insbesondere die Lagerflächen von fertiggebrannten Ziegelsteinen mit Schleifbändern zu bearbeiten, um dadurch einen exakt planparallelen Ziegel zu erhalten, der anstelle von traditionellem Mörtel mit einem Dünnbettmörtel, ähnlich dem sogenannten Fliesenkleber, verarbeitet wird. Dabei ergibt sich nur eine wenige Millimeter dicke Lagerfuge. Die Mauerarbeit mit derartigen Steinen geht erheblich schneller vor sich, da keine Wasserwaage mehr erforderlich ist und die wesentlich dünnere Kleberschicht mit entsprechenden Hilfsmitteln schnell aufgebracht werden kann.

Es hat sich jedoch gezeigt, daß das Schleifen zweier planparalleler Flächen an Ziegelsteinen mit einer Bandschleifvorrichtung erhebliche Probleme bereitet. Man hat versucht, Ziegelsteine mittels zweier gegenüberliegender Bandschleifeinheiten zu schleifen, die in einem vorbestimmten Abstand angeordnet sind, so daß ein Ziegelstein in dem Bereich zwischen den Bandschleifeinheiten eingeführt und auf eine durch den Abstand zwischen den Bandschleifeinheiten festgelegte Breite geschliffen werden kann. Beim Schleifen werden durch die Schleifbänder auf die geschliffenen Oberflächen des Ziegelsteines Schleifkräfte übertragen, die je nach Reibschluß sehr unterschiedlich sein können und den Ziegelstein aus seiner geführten Lage zwischen den Bandschleifeinheiten verdrehen können. Dies führt zu gekrümmten Oberflächen, wobei häufig eine der geschliffenen Oberflächen konvex und die gegenüberliegende geschliffene Oberfläche konkav geschliffen werden.

Diese und weitere Probleme mit Bandschleifmaschinen führten dazu, daß mittlerweile nur noch Vorrichtungen mit Schleifscheiben zur Herstellung von Planziegeln am Markt erhältlich sind, wie sie beispielsweise aus der AT-PS 258752 bekannt sind, und zwei parallel zueinander in vorbestimmtem Abstand angeordnete Schleifscheiben aufweisen, zwischen welchen ein zu schleifender Ziegelstein eingebracht werden kann, so daß zwei gegenüberliegende Flächen des Ziegelsteins von den sich gegenüberliegenden Kreisscheibenflächen der Schleifscheiben geschliffen werden.

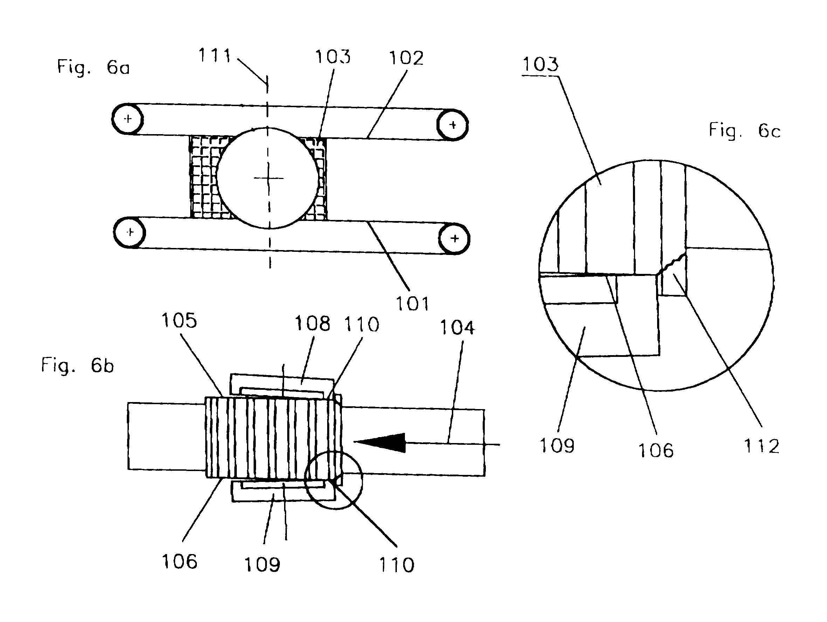

Der schematische Aufbau einer solchen Schleifvorrichtung mit als Topfscheiben ausgebildete Schleifscheiben für Ziegelsteine ist in Fig. 6a (Seitenansicht) und Fig. 6b (Draufsicht) dargestellt. Diese Schleifvorrichtung weist als Transporteinrichtung zwei horizontale Transportbänder 101, 102 auf, die mit vorbestimmtem Abstand parallel übereinnder angeordnet sind und zwischen welchen die zu schleifenden Ziegelsteine 103 in Förderrichtung 104 transportiert werden. Die Ziegelsteine 103 stehen mit ihren zu schleifenden Flächen 105, 106 seitlich an den Transportbändern 101, 102 vor. Die zu schleifenden Flächen 105, 106 des Ziegelsteins 103 sind üblicherweise Lochflächen, an welchen Kammern der Ziegelsteine 103 münden. Als Schleifeinrichtung sind zwei Topfscheiben 108, 109 vorgesehen, die vertikal orientiert und seitlich neben den horizontalen Transportbändern 101, 102 angeordnet sind, so daß sie die zu schleifenden Lochflächen 105, 106 eines Ziegelsteins 103 berühren. Die Topfscheiben weisen an ihrer Peripherie einen umlaufenden Schleifsteg 110 auf, der an der Scheibenfläche der Topfscheiben vorsteht, wobei die Topfscheiben mit ihren Schleifstegen 110 zur Transporteinrichtung weisend angeordnet sind. Die Topfscheiben sind in der Draufsicht um eine vertikale Mittenachse 111 mit ihrem in Förderrichtung 104 vorderen Randbereich zu den Ziegelsteinen 103 zeigend schräg angeordnet, so daß lediglich dieser in Förderrichtung 104 vordere Randbereich der Topfscheiben 108, 109 mit einem zu schleifenden Ziegelstein 103 in Kontakt steht.

Diese Ziegelschleifvorrichtung der Topfscheiben 108, 109 ermöglicht das gleichzeitige Schleifen der beiden zu schleifenden Lochflächen 105, 106 des Ziegelsteines 103, da die auf den Ziegelstein übertragenen Schleifkräfte vertikal und somit senkrecht zu den horizontalen Förderbändern 101, 102 ausgerichtet sind und den Ziegelstein 103 nicht aus seiner Lage zwischen den Förderbändern 101, 102 verrutschen können. Eine solche Ziegelschleifvorrichtung erlaubt das aufeinanderfolgende Schleifen von Ziegelsteinen 103 mit großem Durchsatz, die nach oder vor dem Brennen in einem Brennofen durch die Schleifvorrichtung mittels der Förderbänder 101, 102 in großer Folge befördert werden.

Nachteilig an diesen Schleifvorrichtungen mit Topfscheiben ist jedoch, daß beim Schleifen erhebliche Kerbspannungen entstehen, die insbesondere im Randbereich der zu schleifenden Flächen 105, 106 der Ziegelsteine 103 oftmals zu Randausbrüchen 112 führen (Fig. 6c). Diese Randausbrüche mindern den Wert eines Ziegelsteines erheblich, wobei größere Randausbrüche 112 zu vollständig Unbrauchbarkeit des Ziegelsteines führen.

Ferner werden durch die um die vertikale Mittenachse 111 gekippte Anordnung der Topfscheiben 108, 109 die zu schleifenden Flächen 105, 106 der Ziegelsteine 103 mit einem Hohlschliff geschliffen, so daß die geschliffenen Flächen nur näherungsweise plan sind.

Ferner wird Schleifstaub vom Schleifsteg der Topfscheiben auf den zu schleifenden Flächen verschmiert, wodurch der Schleifstaub in den Poren des Ziegelsteins eingebracht wird bzw. sich in den Kammern des Ziegelsteinst ansammelt. Da die Schleifstege 110 über die gesamte Breite der zu schleifenden Flächen 105, 106 schleifen, wird der Schleifstaub in die Poren des Ziegelsteins eingedrückt, so daß starke Gebläse und Bürsten zur Reinigung der geschliffenen Flächen notwendig sind. Trotz dieser Reinigungsvorrichtungen verbleibt Schleifstaub in den Poren, wodurch die Haftung beim Verkleben der Ziegel erheblich vermindert wird.

Zudem können Staubablagerungen in der Topfscheibe zu Unwuchten derselben führen.

Der schmale Schleifsteg der Topfscheiben unterliegt einem ständigen Abrieb. Zum Ausgleich dieses Abriebs ist es notwendig, den Abstand zwischen den Topfscheiben in regelmäßigen Zeitabständen zu justieren, um eine erforderliche Genaugikeit von etwa 0,1 mm zu erzielen.

Der Erfindung liegt die Aufgabe zugrunde, eine Ziegelschleifvorrichtung zur Herstellung von Planziegeln zu schaffen, mit der zwei gegenüberliegende Flächen eines Ziegelsteines mit hoher Qualität und sehr geringem Ausschuß plan geschliffen werden können.

Die Aufgabe wird durch eine Ziegelschleifvorrichtung mit den Merkmalen des Anspruchs 1 gelöst. Vorteilhafte Ausgestaltungen sind in den Unteransprüchen gekennzeichnet.

Die erfindungsgemäße Ziegelschleifvorrichtung für die Herstellung von Planziegeln weist zumindest zwei Schleifstationen auf, die jeweils eine Bandschleifeinheit und einen Anschlag aufweisen. Die Bandschleifeinheit und der Anschlag einer Schleifstation sind in einem vorbestimmten Abstand zueinander angeordnet, so daß ein Ziegel in dem Bereich zwischen dem Anschlag und der Bandschleifeinheit eingeführt und auf die durch den Abstand festgelegte Breite mit einem Schleifband geschliffen wird, wobei die beiden Schleifstationen entlang einer Transporteinrichtung mit ihren Bandschleifeinheiten auf gegenüberliegenden Seiten der Transporteinrichtung angeordnet sind.

Da mit der erfindungsgemäßen Ziegelschleifvorrichtung die Ziegelsteine in den Schleifstationen nur einseitig geschliffen werden, können die von den Schleifbändern auf die Ziegelsteine übertragenen Schleifkräfte von den gegenüberliegenden Anschlägen aufgenommen werden, ohne daß die Ziegelsteine hierbei verrutschen und ihre exakte Lage zu dem jeweiligen Schleifband verändern. Durch die Verwendung von Schleifbändern wird ein sehr gleichmäßiger Abtrag auf den zu schleifenden Oberflächen der Ziegelsteine erzielt, wodurch selbst Ziegel mit dünnen Stegen ohne Ausbrüche geschliffen werden können.

Gegenüber den Ziegelschleifvorrichtungen mit Topfscheiben weist die erfindungsgemäße Ziegelschleifvorrichtung folgende, wesentliche Vorteile auf:
- Ausschuß-freies Schleifen der Ziegel;
- Erzielung einer exakt planen Schliff-Fläche;
- durch die Verwendung von Schleifbändern wird ein sehr gleichmäßiges Schliffbild erzielt;
- die Poren des Ziegelsteins sind nahezu vollständig staubfrei, insbesondere wenn die Schleifrichtung entgegen zur Transportrichtung gerichtet ist, so daß eine aufwendige Reinigung entfallen kann;
- Einrichtungen zum Absaugen von Schleifstaub können einfach angeordnet werden.

Die Erfindung wird nachfolgend näher anhand von in der Zeichnung dargestellten Ausführungsbeispielen erläutert. Es zeigen schematisch vereinfacht:
- Fig. 1: eine erfindungsgemäße Ziegelschleifvorrichtung in der Draufsicht;
- Fig. 2: die in Fig. 1 abgebildete Ziegelschleifvorrichtung in der Seitenansicht;
- Fig. 3: die in Fig. 1 abgebildete Ziegelschleifvorrichtung in der Stirnansicht;
- Fig. 4: eine weitere Ausführungsform der erfindungsgemäßen Ziegelschleifvorrichtung in der Draufsicht;
- Fig. 5: eine weitere Ausführungsform einer erfindungsgemäßen Ziegelschleifvorrichtung in der Seitenansicht;
- Fig. 6a, 6b: eine bekannte Ziegelschleifvorrichtung mit Topfscheiben in der Seitenansicht und in der Draufsicht;
- Fig. 6c: einen Randbereich eines Ziegelsteines in der Draufsicht, der mit einer Ziegelschleifvorrichtung mit Topfscheiben geschliffen wird.

Die erfindungsgemäße Ziegelschleifvorrichtung dient zum Schleifen von Ziegelsteinen, insbesondere gebrannten oder ungebrannten Ton-Ziegelsteinen. Diese Ziegelsteine werden im Extruderverfahren hergestellt, wobei ein im Querschnitt rechteckiger extrudierter Strang, der in Längsrichtung verlaufende hohle Kanäle aufweist, zu den Ziegelsteinen geschnitten wird, so daß die Ziegelsteine 1 quaderförmige Körper bilden, mit vier umlaufend angeordneten Seitenwandungen 2 bis 5 und zwei sogenannte Lochflächen 6, 7, an welchen die den Ziegelstein 1 durchsetzende Kanäle offen münden. Die Kanäle im Ziegelstein 1 werden durch im Rechteckraster angeordnete Stege 8, 9 begrenzt, die sich jeweils zwischen den gegenüberliegenden Seitenwandungen 2, 4 bzw. 3, 5 erstrecken und senkrecht zu diesen Seitenwandungen 2 bis 5 verlaufen. Die Stege 8, 9 sind üblicherweise schmaler als die Seitenwandungen 2 bis 5.

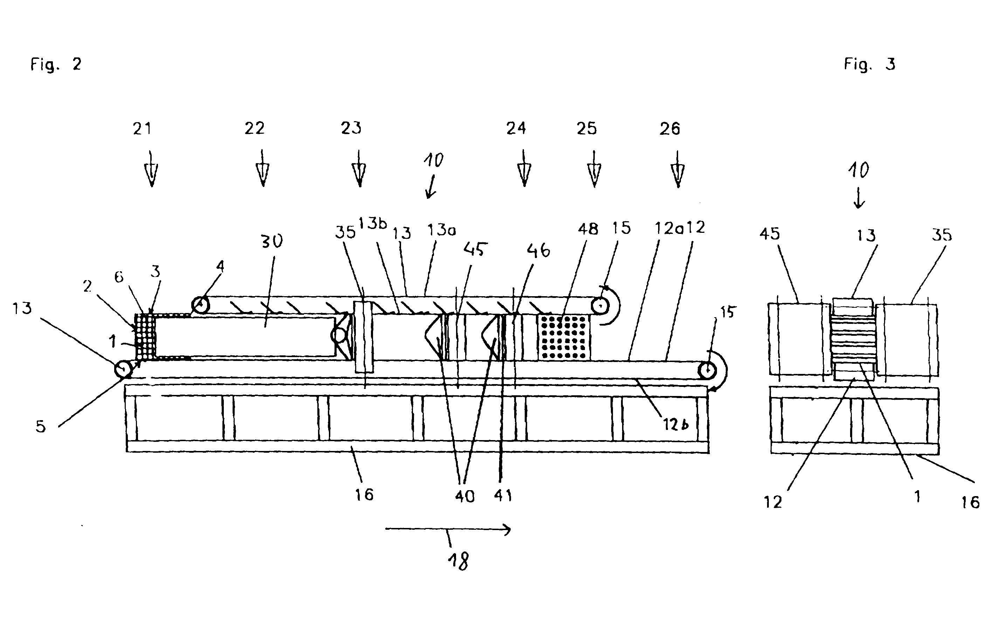

Eine Schleifvorrichtung 10 zum Schleifen von Ziegelsteinen 1 weist als Transporteinrichtung 11 ein unteres und ein oberes endloses Förderband 12, 13 auf, die jeweils um Umlenkwalzen 15 geführt sind. Das untere Förderband 12 ist auf einem Grundgestell 16 angeordnet, wobei es sich etwa über die gesamte Länge des Grundgestells 16 erstreckt (Fig. 2). Das obere Förderband 13 ist parallel zum unteren Förderband 12 oberhalb diesem angeordnet, wobei das untere Förderband 12 an beiden Enden um zumindest eine Ziegelsteinlänge am oberen Förderband 13 vorsteht, so daß -die Ziegelsteine 1 an den Endbeichen des unteren Förderbandes 12 aufgelegt bzw. abgenommen werden können. Das untere Förderband 12 und das obere Förderband 13 weisen jeweils einen unteren und oberen Trum 12a, 12b bzw. 13a, 13b auf, wobei der obere Trum 12a des unteren Förderbandes 12 und der untere Trum 13b des oberen Förderbandes 13 in Förderrichtung 18 angetrieben werden. Der obere Trum 12a des unteren Förderbandes 12 ist in an sich bekannter Weise von einer Platte (nicht dargestellt) unterstützt und der untere Trum 13b des oberen Förderbandes 13 wird von Niederhaltern 19 nach unten gedrückt, so daß der untere Trum 13b des oberen Förderbandes 13 nicht nach oben ausweichen kann.

An der Transporteinrichtung 11 befinden sich in Förderrichtung 18 aufeinanderfolgend ein Aufgabebereich 21, ein Einzugsbereich 22, eine erste Schleifstation 23, eine zweite Schleifstation 24, ein Gebläsebereich 25 und ein Entnahmebereich 26.

Am Aufgabebereich 21 steht das untere Förderband 12 gegenüber dem oberen Förderband 13 etwas vor, so daß ein Ziegelstein 1 auf das untere Förderband 12 aufgelegt werden kann.

Der Einzugsbereich 22 weist ein vertikal angeordnetes, um eine vordere und hintere Umlenkrolle 28, 29 geführtes endloses Einzugsband 30 auf. Gegenüberliegend zum Einzugsband 30 ist eine als Anschlag dienende vertikale Gleitplatte 32 an der Transporteinrichtung 11 angeordnet. Die Gleitplatte 32 ist parallel und mit geringem Abstand zu den beiden Förderbändern 12, 13 angeordnet. Die vordere Umlenkrolle 28 des Einzugsbandes 30 weist einen etwas größeren Abstand zur Gleitplatte 32 bzw. zu den Förderbändern 12, 13 als die hintere Umlenkrolle 29 auf. Der Abstand D1 zwischen der hinteren Umlenkrolle 29 und der Gleitplatte 32 entspricht etwa der Breite B der unbehandelten Ziegelsteine 1. Das Einzugsband 30 wird mit seinem zu den Förderbändern 12, 13 benachbart angeordneten Trum 33 in Förderrichtung 18 angetrieben.

An der dem Einzugsbereich 22 nachgeordneten ersten Schleifstation 23 ist eine Bandschleifeinheit 35 und ein an der Transporteinrichtung 11 gegenüberliegender Anschlag vorgesehen. Als Anschlag fungiert hier wiederum die Gleitplatte 32, die sich über den Bereich des Einzugsbereichs 22 und der ersten Schleifstation erstreckt. Die Bandschleifeinheit 35 besteht aus einem endlosen Schleifband 36, das um eine angrenzend zu den Förderbändern 12, 13 angeordnete Kontaktrolle 37 und um eine Umlenkrolle 38 geführt ist. Die Kontaktrolle 37 und die Umlenkrolle 38 sind vertikal angeordnet, wobei zumindest eine der beiden Rollen 37, 38 so angetrieben ist, daß das Schleifband 36 im Bereich der Kontaktrolle 37 entgegen zur Förderrichtung 18 bewegt wird. Die Kontaktrolle 37 ist an ihrer Mantelfläche mit einem elastisch nachgebenden Gummi- oder Kunststoffbelag versehen, der eine Dicke von etwa 5 mm bis 20 mm aufweist. Der elastisch nachgebende Belag weist eine Shore-Härte von 30 bis 90 und vorzugsweise 55 bis 75 auf. In Förderrichtung vor und unmittelbar neben der Kontaktrolle 37 ist eine Saugdüse 40 vorgesehen, die einen Mündungsschlitz 41 aufweist, der vertikal ausgerichtet ist und sich zumindest vom oberen Trum 12a des unteren Förderbandes 12 bis zum unteren Trum 13b des oberen Förderbandes 13 erstreckt. Die Saugdüse 40 ist mit einem Schlauch 43 an eine Saugeinrichtung (nicht dargestellt) angeschlossen.

Die zweite Schleifstation 24, die sich in Förderrichtung 18 an die erste Schleifstation 23 anschließt, weist eine zweite und dritte Bandschleifeinheit 45, 46 auf, die in Förderrichtung aufeinanderfolgend angeordnet sind und wie die erste Bandschleifeinheit 35 aus einem um eine Kontaktrolle 37 und eine Umlenkrolle 38 geführten endlosen Schleifband 36 bestehen. Die Kontaktrollen 37 und/oder Umlenkrollen 38 sind so angetrieben, daß die Schleifbänder 36 an der Kontaktrolle 37 entgegen zur Förderrichtung 18 bewegt werden. Den Bandschleifeinheiten 45, 46 ist an der Transporteinrichtung 11 gegenüberliegend eine als Anschlag dienende Gleitplatte 48 angeordnet, die mit geringem Abstand angrenzend an die Förderbänder 12, 13 angeordnet und vertikal ausgerichtet ist. Die Gleitplatte 48 erstreckt sich mit ihrem vorderen Randbereich bis nahe an die Bandschleifeinheit 35 der ersten Schleifstation 23, so daß im Übergangsbereich zwischen der ersten und zweiten Schleifstation 23, 24 die Förderbänder 12, 13 beidseitig von den Gleitplatten 32, 48 eingefaßt und geführt sind. Die Gleitplatte 48 erstreckt sich durch den Gebläsebereich 25 hindurch bis in den Entnahmebereich 26. An der zweiten und dritten Bandschleifeinheit 45, 46 sind wiederum in Förderrichtung 18 vor und unmittelbar neben den Kontaktrollen 37 Saugdüsen 40 mit vertikalen Mündungsschlitzen 41 angeordnet, die über Schläuche 43 jeweils an eine Saugeinrichtung angeschlossen sind.

Im Gebläsebereich 25 ist die Gleitplatte 48 mit in einem regelmäßigen Raster angeordneten Löchern 49 perforiert, wobei in die Löcher 49 Gebläseleitungen 50 eingesetzt sind, mit welchen von einem Gebläse (nicht dargestellt) Luft quer zur Förderrichtung 18 in den Bereich zwischen den Förderbändern 12, 13 eingeblasen wird. Dem perforierten Bereich der Gleitplatte 48 ist gegenüberliegend ein Absaugtrichter 52 angeordnet, der mit einer Saugeinrichtung (nicht dargestellt) verbunden ist, so daß die vom Gebläse eingeblasene Luft abgesaugt wird.

Am Entnahmebereich 36 steht das untere Förderband 12 über dem oberen Förderband 13 vor, so daß frei liegende Ziegelsteine 1 entnommen werden können.

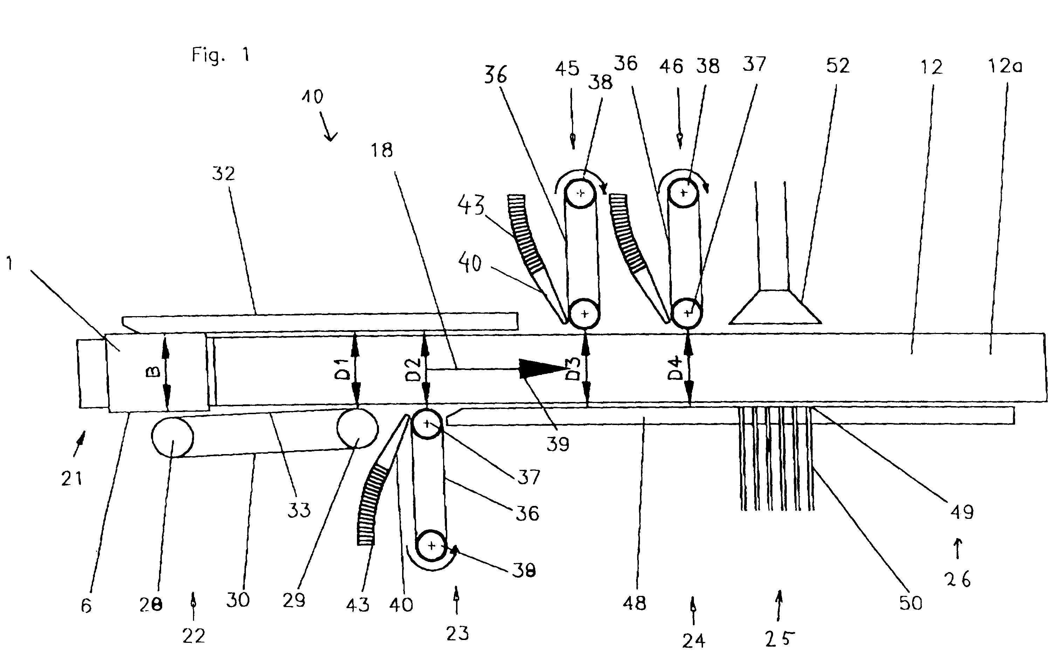

Die Bandschleifeinheit 35 der ersten Schleifstation 23 ist in der Draufsicht (Fig. 1) in Förderrichtung 18 rechtsseitig an der Transporteinrichtung 11 und die Bandschleifeinheiten 45, 46 der zweiten Schleifstation 24 sind in Förderrichtung linksseitig an der Transporteinrichtung 11 angeordnet. Wesentlich ist, daß die Bandschleifeinheiten 35, 45 und 46 in Förderrichtung 18 versetzt an der Fördereinrichtung 11 angeordnet sind, wobei sowohl auf der in Förderrichtung linken als auch der in Förderrichtung rechten Seite der Transporteinrichtung 11 zumindest eine Bandschleifeinheit 35, 45 oder 46 angeordnet ist. Die Bandschleifeinheiten 35, 45 und 46 weisen jeweils eine Verstelleinrichtung (nicht dargestellt) auf, mit welchen die Abstände D2, D3 und D4 zwischen den Kontaktrollen 37 und den jeweils gegenüberliegend angeordneten Gleitplatten 32, 48 auf einen vorbestimmten Wert eingestellt werden können. Die Schleifbänder 36 der ersten und zweiten Bandschleifeinheit 35, 45 weisen vorzugsweise eine gröbere Körnung als das Schleifband 36 der dritten Bandschleifeinheit 46 auf. Die gröberen Schleifbänder 36 besitzen bespielsweise eine Körnung von P30 und das feinere Schleifband eine Körnung von P50 bis P100.

Nachfolgend wird der Betrieb der erfindungsgemäßen Schleifvorrichtung erläutert.

Ein zu schleifender Ziegelstein 1 wird im Aufgabebereich 21 auf den oberen Trum 12a des unteren Förderbandes 12 mit einer Seitenwandung 5 aufgelegt, so daß die beiden gegenüberliegenden Lochflächen 6, 7 vertikal angeordnet sind. Der Ziegelstein 1 wird vom Förderband 12 in Förderrichtung 18 in den Einzugsbereich 22 befördert und im Einzugsbereich 22 von dem angrenzend neben dem Förderband 12 angeordneten Trum 33 des Einzugsbandes 30 mitgenommen und durch den sich in Förderrichtung verengenden Abstand zwischen dem Einzugsband 30 und der Gleitplatte 32 gegen diese gedrückt. Hierdurch wird der Ziegelstein 1 an der Gleitplatte 32 anliegend und somit exakt auf dem Förderband 12 ausgerichtet, so daß er mit seinen Lochflächen 6, 7 beiderseits am Förderband 12 vorsteht.

Ein derart positionierter Ziegelstein 1 wird durch den oberen Trum 12a des unteren Förderbandes 12 und den unteren Trum 13b des oberen Förderbandes 13 und durch die Gleitplatte 32 zur ersten Schleifstation 23 befördert, an welcher die Lochfläche 6 des Ziegelsteins 1 in Kontakt mit dem um die Kontaktrolle 37 geführten Schleifbandes 36 kommt, das entgegen zur Förderrichtung 18 bewegt wird und die Lochfläche 6 des Ziegelsteins 1 plan schleift. Die Kontaktrolle 37 ist exakt und unverrückbar positioniert, so daß die Lochfläche 6 exakt plan und ebenflächig geschliffen wird. Der Gummi- bzw. Kunststoffbelag der Kontaktstellen 37 ist elastisch deformierbar, so daß die Schleifkörner der Schleifbänder 36 bei hohen Schleifkräften einzeln ausweichen können und nicht aus dem Verbund mit dem Schleifband gerissen werden. Der Verschleiß der Schleifbänder wird durch den elastisch deformierbaren Belag erheblich vermindert. Zudem können Toleranzen an den ungeschliffenen Ziegelsteinen 1 ausgeglichen und das Schleifband 36 mit Druck gegen die Lochfläche 6 gedrückt werden.

Beim Schleifen wird der Schleifstaub von den Schleifbändern 36 entgegen zur Förderrichtung 18 zu der Saugdüse 40 mitgenommen und von dieser aufgesaugt. Es wird somit ein glattes, im wesentlichen schleifstaubfreies, zumindest schleifstaubarmes Schliffbild an der Lochfläche 6 erzeugt. Während des Schleifvorganges wird der Ziegelstein 1 von der Bandschleifeinheit 35 gegen die Gleitplatte 32 gedrückt, so daß dieser mit seiner Lochfläche 7 flächig an der Gleitplatte 32 anliegt, wodurch die auf den Ziegelstein 1 ausgeübten Schleifkräfte ohne ein Verrutschen bzw. Verdrehen um eine Hochachse vom Ziegelstein 1 aufgenommen und auf die Gleitplatte 32 übertragen werden. Bei der erfindungsgemäßen Schneidvorrichtung sind nur geringe Führungskräfte notwendig, die von den Niederhaltern 19 auf den Ziegelstein ausgeübt werden, um diesen exakt positioniert ohne zu verrutschen, durch die erste Schleifstation und die zweite Schleifstation zu führen. Da nur geringe Führungskräfte an dem zu schleifenden Ziegelstein anliegen, vermindert sich die Gefahr von Ausbrüchen.

An der zweiten Schleifstation wird die zur in der ersten Schleifstation 23 geschliffenen Lochfläche 6 gegenüberliegende Lochfläche 7 von der Bandschleifeinheit 45 geschliffen. Das Schleifen durch die zweite Bandschleifeinheit 45 erfolgt in identischer Weise wie durch die erste Bandschleifeinheit 35, wobei der Ziegelstein 1 lediglich gegen die Gleitplatte 48 mit seiner bereits geschliffenen Lochfläche 6 gedrückt wird und an der Lochfläche 7 exakt plan und ebenflächig geschliffen wird.

Mit der dritten Bandschleifeinheit 46, die ein feineres Schleifband 36 als die erste und zweite Bandschleifeinheit 35, 45 aufweist, erfolgt ein Kalibrierschliff, d.h., daß die Breite B des Ziegelsteins 1 beispielsweise exakt auf 1/10 mm geschliffen wird. Das Schleifband 36 der dritten Bandschleifeinheit 46 weist vorzugsweise eine Körnung mit einer Feinheit von zumindest P40 oder feiner auf. Die Dicke eines solchen Schleifbandes verändert sich durch Abrieb nur unwesentlich, wobei die Dickenänderungen innerhalb des Toleranzbereiches der Breite B des Ziegelsteins 1 liegen, so daß unabhängig vom Abrieb des Schleifbandes 36 der Ziegelstein immer auf exakt sein Sollmaß geschliffen wird. Zudem wird durch das Schleifen mit dem feinen Schleifband eine sehr feine Oberflächenstruktur an der Lochfläche 7 erhalten. Im übrigen erfolgt der Schleifvorgang in identischer Weise wie bei den beiden ersten Bandschleifeinheiten 35, 45, wobei das Schleifband 36 entgegen zur Förderrichtung 18 an der Lochfläche 7 schleift und der erzeugte Schleifstaub unmittelbar der Saugdüse 40 zugeführt wird.

Der auf sein exaktes Maß geschliffene Ziegelstein 1 wird durch den Gebläsebereich 25 hindurch befördert, in dem Luft durch die den Ziegelstein 1 quer zu den Lochflächen 6, 7 erstreckenden Kanäle durchgeblasen wird, um den sich darin ansammelnden Schleifstaub zu entfernen und dem Absaugtrichter 52 abzusaugen. Am Entnahmebereich 26 wird der geschliffene und von Staub gesäuberte Ziegelstein der Schleifvorrichtung entnommen.

Vorzugsweise sind die Bandschleifeinheiten 35, 45 und 46 so ausgebildet, daß die Schleifbänder 36 an den Kontaktrollen 37 in vertikaler Richtung oszillieren, d.h., daß sie sich an den Kontaktrollen 37 auf- und abwärts bewegen. Hierdurch wird eine ungleichmäßige Abnutzung des Schleifbandes 36, wie sie bei einem permanent auf exakt gleicher Höhe umlaufenden Schleifband auftreten würde, verhindert, da ein solches Schleifband im Bereich der horizontalen Stege 8 stärker als in dem Zwischenbereich zwischen den horizontalen Stegen 8 beansprucht werden würde.

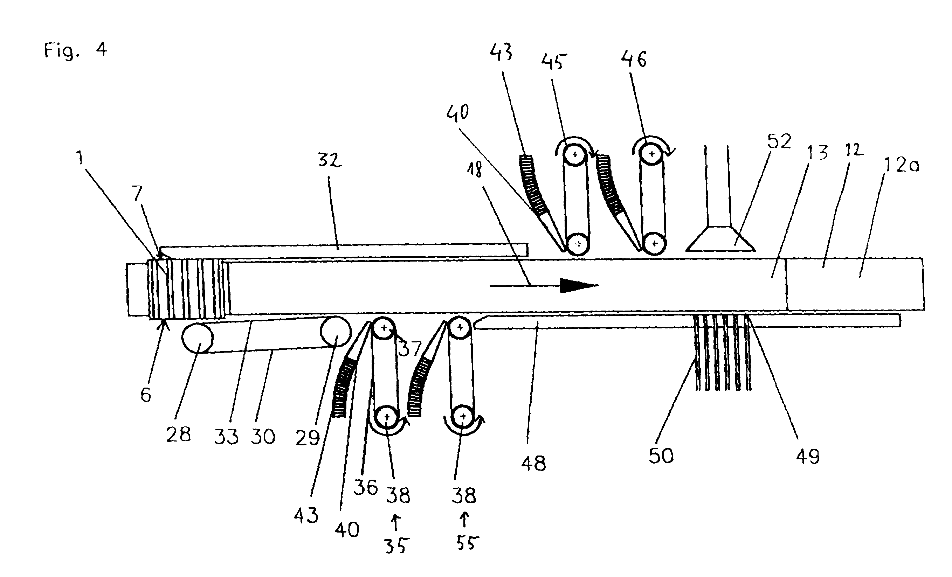

Eine weitere Ausführungsform der erfindungsgemäßen Schleifvorrichtung ist in Fig. 4 abgebildet. Diese Schleifvorrichtung ist wie das oben erläutere Ausführungsbeipiel aus einem Einzugsbereich 22, einer ersten Schleifstation 23, einer zweiten Schleifstation 24, einem Gebläsebereich 25 und einem Entnahmebereich 26 ausgebildet. Gegenüber dem oben erläuterten Ausführungsbeispiel unterscheidet sich diese Schleifvorrichtung lediglich im Aufbau der ersten Schleifstation, die zur ersten Bandschleifeinheit 35 nachgeordnet eine vierte Bandschleifeinheit 55 aufweist, die wie die übrigen Bandschleifeinheiten ein endloses Schleifband 36 aufweist, das um eine Kontaktrolle 37 und eine Umlenkrolle 38 geführt ist, wobei das Schleifband 36 um die Kontaktrolle 37 entgegen zur Förderrichtung 18 angetrieben wird. Diese vierte Bandschleifeinheit 55 ist wiederum mit einer Saugdüse 40 versehen, die an eine Absaugeinrichtung über einen Schlauch 43 angeschlossen ist. Das Schleifband 36 dieser vierten Bandschleifeinheit weist eine feinere Körnung als das Schleifband der ersten Bandschleifeinheit 35 auf, so daß die Lochfläche 6 des Ziegelsteins 1 fein nachgeschliffen wird. Vorzugsweise ist die Körnung des Schleifbandes 36 der vierten Bandschleifeinheit 55 identisch zur Körnung des Schleifbandes 36 der dritten Bandschleifeinheit 46 und weist zumindest eine Feinheit von P40 auf.

Mit dieser Schleifvorrichtung erhalten beide Lochflächen 6, 7 des Ziegelsteins 1 das gleiche feine Schliffbild.

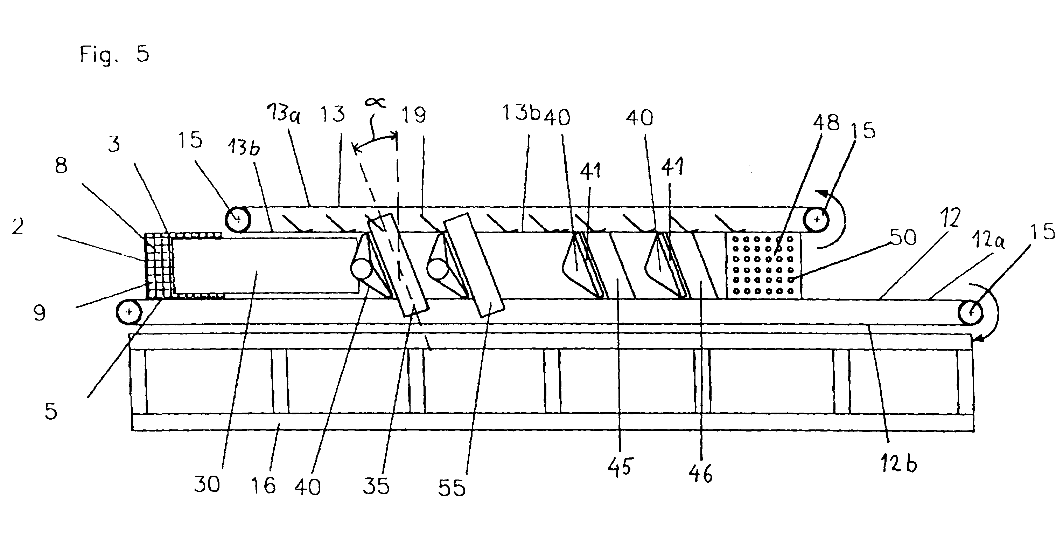

Eine weitere Ausführungsform der erfindungsgemäßen Schleifvorrichtung ist in Fig. 5 gezeigt, die im wesentlichen identisch wie die in Fig. 4 abgebildete Schleifvorrichtung ausgebildet ist und sich gegenüber dieser lediglich dadurch unterscheidet, daß die Bandschleifeinheiten 35, 45, 46 und 55 gegenüber einer Vertikalen 58 eine Neigung um einen Winkel a von etwa 15 bis 30° aufweisen. Die Bandschleifeinheiten 35, 45, 46, 55 sind mit ihrem oberen Randbereich entgegen zur Förderrichtung 18 geneigt. Diese Neigung der Bandschleifeinheiten 35, 45, 46, 55 bewirkt, daß in die Lochflächen 6, 7 keine durchgehenden horizontalen Riefen geschliffen werden, sondern lediglich kurze schräggestellte Kerben eingebracht werden. Hierdurch ergibt sich ein sehr glattes Schliffbild. Die Saugdüsen 40 der einzelnen Bandschleifeinheiten sind entsprechend geneigt angeordnet.

Die erfindungsgemäße Schleifvorrichtung ist nicht auf die oben angegebenen Ausführungsformen beschränkt. Im Rahmen der Erfindung liegt auch eine Schleifvorrichtung mit lediglich zwei Bandschleifeinheiten, die in Förderrichtung versetzt und gegenüberliegend an einer Transporteinrichtung angeordnet sind. Bei einer solchen Schleifvorrichtung ist es zweckmäßig, daß die Schleifbänder dieser Bandschleifeinheiten mit einer relativ groben Körnung versehen sind, damit die erforderliche Schleifleistung erbracht wird und die notwendige Schleiftiefe erzielt wird. Die zweite, in Förderrichtung nachfolgende Bandschleifeinheit ist deshalb vorzugsweise mit einer Justiereinrichtung versehen, mit welcher die Abstandsveränderung zwischen der Bandschleifeinheit und dem gegenüberliegenden Anschlag aufgrund des Schleifbandabriebes nachgestellt werden kann bzw. sich selbsttätig mittels einer elektronischen Stelleinrichtung nachstellt.

Die zu den Bandschleifeinheiten gegenüberliegend angeordneten Anschläge können auch als Transportförderbänder ausgebildet sein, wobei ein Trum des Transportförderbandes auf den zur Transporteinrichtung 11 zeigenden Flächen der Gleitplatten 32, 48 aufliegt und in Förderrichtung 18 angetrieben wird.

Mit der erfindungsgemäßen Schleifvorrichtung können Ziegelsteine an zwei gegenüberliegenden Flächen planparallel geschliffen werden, wobei ein glattes, gleichmäßiges, ebenflächiges Schliffbild erhalten wird. Die Führung des zu schleifenden Ziegelsteines kann mit geringem Druck erfolgen und es wird ein im wesentlichen schleifstaubfreier Ziegelstein erhalten. Mit der erfindungsgemäßen Schleifvorrichtung können Ziegel, die selbst sehr dünne Stege aufweisen, ausschußfrei ohne Ausbrüche geschliffen werden. Die erfindungsgemäße Schleifvorrichtung hat einen im Vergleich zu herkömmlichen Schleifvorrichtungen mit Topfscheiben um mehr als eine Hälfte verringerten Leistungsbedarf. So benötigt eine erfindungsgemäße Schleifvorrichtung mit vier Bandschleifeinheiten (4 x 7,5 KW) und einem Gebläse (3 - 10 KW) etwa 40 KW, eine herkömmliche, mit Topfscheiben arbeitende Schleifvorrichtung mit vier Topfscheiben (4 x 23 - 30 KW) und einer Reinigungsvorrichtung (20 - 30 KW) zwischen 92 KW und 150 KW.

Die erfindungsgemäße Schleifvorrichtung kann zudem sehr einfach ausgebildet sein, denn die Anschläge sind vorzugsweise ortsfest angeordnet und die Bandschleifeinheiten können mit einer einfachen Verstelleinheit versehen werden, mit welcher der Abstand zu den gegenüberliegend angeordneten Anschlägen eingestellt wird.

## Patentansprüche

1. Ziegelschleifvorrichtung für die Herstellung von Planziegeln, mit zumindest zwei Schleifstationen (23, 24), die jeweils eine Bandschleifeinheit (35, 45, 46, 55) und einen Anschlag (32, 48) aufweisen, die jeweils in einem vorbestimmten Abstand (D2, D3, D4) zueinander angeordnet sind, so daß ein Ziegelstein (1) in den Bereich zwischen dem Anschlag (32, 48) und der Bandschleifeinheit (35, 45, 46, 55) eingeführt und auf eine durch die Abstände (D2, D3, D4) festgelegte Breite geschliffen werden kann, wobei die beiden Schleifstationen (23, 24) entlang einer Transporteinrichtung (11) zum Befördern von Ziegelsteinen (1) in Förderrichtung (18) versetzt und mit ihren Bandschleifeinheiten (35, 45, 46, 55) auf gegenüberliegenden Seiten der Transporteinrichtung (11) angeordnet sind, wodurch zwei gegenüberliegende Seitenflächen (6, 7) des Ziegelsteins (1) planparallel geschliffen werden können.

2. Ziegelschleifvorrichtung nach Anspruch 1 wobei die Bandschleifeinheit (46) ein Schleifband mit einer Körnung von P40 oder feiner aufweist.

3. Ziegelschleifvorrichtung nach Anspruch 1 oder 2,
**dadurch gekennzeichnet,**
daß die zweite Schleifstation (24), die der ersten Schleifstation in Förderrichtung (18) nachgeordnet ist, zwei Bandschleifeinheiten (45, 46) aufweist, wobei die in Förderrichtung (18) nachgeordnete Bandschleifeinheit (46) ein Schleifband (36) mit einer Körnung aufweist, die zumindest genauso fein, vorzugsweise feiner, als die Körnung der Schleifbänder (36) der übrigen Bandschleifeinheiten (35, 45) ist.

4. Ziegelschleifvorrichtung nach einem der Ansprüche 1 bis 3,
**dadurch gekennzeichnet,**
daß die erste Schleifstation (23) zwei Bandschleifeinheiten (35, 55) aufweist, wobei die in Förderrichtung nachgeordnete Bandschleifeinheit (55) ein Schleifband mit feinerer Körnung als das Schleifband der in Förderrichtung vorgeordneten Bandschleifeinheit (35) aufweist.

5. Ziegelschleifvorrichtung nach Anspruch 4,
**dadurch gekennzeichnet,**
daß die zweite Schleifstation (24) zwei Bandschleifeinheiten (45, 46) aufweist, wobei die in der ersten und zweiten Schleifstation (23, 24) vorgeordneten Bandschleifeinheiten und die in der ersten und zweiten Schleifstation (23, 24) nachgeordneten Bandschleifeinheiten jeweils Schleifbänder mit gleicher Körnung aufweisen.

6. Ziegelschleifvorrichtung nach einem der Ansprüche 1 bis 5,
**dadurch gekennzeichnet,**
daß die Transporteinrichtung (11) aus einem unteren und einem oberen endlosen Förderband (12, 13) ausgebildet ist, die jeweils um Umlenkwalzen (15) geführt sind, wobei das obere Förderband (13) parallel zum unteren Förderband (12) oberhalb diesem angeordnet ist und das untere Förderband (12) und das obere Förderband (13) jeweils einen unteren und oberen Trum (12a, 12b bzw. 13a, 13b) aufweisen und der obere Trum (12a) des unteren Förderbandes (12) und der untere Trum (13b) des oberen Förderbandes (13) in Förderrichtung (18) von einer Antriebseinrichtung antreibbar sind.

7. Ziegelschleifvorrichtung nach Anspruch 6,
**dadurch gekennzeichnet,**
daß der untere Trum (13b) der oberen Förderbandes (13) von Niederhaltern (19) nach unten gedrückt wird, so daß der untere Trum (13b) des oberen Förderbandes (13) nicht nach oben ausweichen kann.

8. Ziegelschleifvorrichtung nach einem der Ansprüche 1 bis 7,
**dadurch gekennzeichnet,**
daß die Bandschleifeinheiten (35, 45, 46, 55) jeweils ein endloses Schleifband (36) aufweisen, das um eine angrenzend zur Transporteinrichtung (11) angeordnete Kontaktrolle (37) und um eine Umlenkrolle (38) geführt ist, wobei zumindest eine der beiden Rollen (37, 38) so antreibbar ist, daß das Schleifband (36) vorzugsweise im Bereich der Kontaktrolle (37) entgegen zur Förderrichtung (18) bewegt wird.

9. Ziegelschleifvorrichtung nach Anspruch 8,
**dadurch gekennzeichnet,**
daß die Kontaktrolle (37) mit einem elastisch nachgebenden Belag, insbesondere einem Gummi- oder Kunststoffbelag versehen ist, der eine Dicke von etwa 5 mm bis 20 mm aufweist.

10. Ziegelschleifvorrichtung nach Anspruch 9,
**dadurch gekennzeichnet,**
daß der Belag eine Shore-Härte von 30 bis 90 und vorzugsweise von 55 bis 75 aufweist.

11. Ziegelschleifvorrichtung nach einem der Ansprüche 8 bis 10,
**dadurch gekennzeichnet,**
daß in Förderrichtung vor und unmittelbar neben der Kontaktrolle (37) jeweils eine Saugdüse (40) vorgesehen ist, die einen Mündungsschlitz (41) aufweist, der parallel zur Kontaktrolle (37) ausgerichtet ist und sich zweckmäßigerweise vom oberen Trum (12a) des unteren Förderbandes (12) bis zum unteren Trum (13b) des oberen Förderbandes (13) erstreckt.

12. Ziegelschleifvorrichtung nach einem der Ansprüche 1 bis 11,
**dadurch gekennzeichnet,**
daß an der Transporteinrichtung (11) in Förderrichtung (18) aufeinanderfolgend ein Aufgabebereich (21), ein Einzugsbereich (22), die erste Schleifstation (23), die zweite Schleifstation (24), zweckmäßigerweise ein Gebläsebereich (25) und ein Entnahmebereich (26) angeordnet sind.

13. Ziegelschleifvorrichtung nach Anspruch 12,
**dadurch gekennzeichnet,**
daß der Einzugsbereich (22) ein vertikal angeordnetes, um eine vordere und hintere Umlenkrolle (28, 29) geführtes endloses Einzugsband (30) aufweist, wobei an der Transporteinrichtung (11) gegenüberliegend zum Einzugsband (30) eine als Anschlag dienende vertikale Gleitplatte (32) angeordnet ist, wobei die vordere Umlenkrolle (28) des Einzugsbandes (30) einen etwas größeren Abstand zur Gleitplatte (32) als die hintere Umlenkrolle (29) aufweist, so daß sich der Abstand zwischen dem Einzugsband und der Gleitplatte (32) in Förderrichtung (18) verengt.

14. Ziegelschleifvorrichtung nach Anspruch 13,
**dadurch gekennzeichnet,**
daß sich die Gleitplatte (32) vom Einzugsbereich (22) bis in den Bereich der ersten Schleifstation (23) erstreckt und dort als Anschlag zu der an der Transporteinrichtung (11) gegenüberliegenden Bandschleifeinheit (35) fungiert.

15. Ziegelschleifvorrichtung nach einem der Ansprüche 12 bis 14,
**dadurch gekennzeichnet,**
daß eine als Anschlag dienende Gleitplatte (48) an der Transporteinrichtung (11) den Bandschleifeinheiten (45, 46) der zweiten Schleifstation gegenüberliegend angeordnet ist, wobei sich die Gleitplatte (48) von der zweiten Schleifstation durch den Gebläsebereich (25) hindurch bis in den Entnahmebereich (26) erstreckt.

16. Ziegelschleifvorrichtung nach Anspruch 15,
**dadurch gekennzeichnet,**
daß im Gebläsebereich (25) die Gleitplatte (48) perforiert ist, wobei ein Gebläse zum Einblasen von Luft quer zur Förderrichtung (18) zur Entfernung des Schleifstaubes aus den Kanälen der Ziegel (1) vorgesehen ist.

17. Ziegelschleifvorrichtung nach einem der Ansprüche 1 bis 16,
**dadurch gekennzeichnet,**
daß die Bandschleifeinheiten (35, 45, 46, 55) so ausgebildet sind, daß die Schleifbänder (36) an den Kontaktrollen (37) in vertikaler Richtung oszillieren.

18. Ziegelschleifvorrichtung nach einem der Ansprüche 1 bis 17,
**dadurch gekennzeichnet,**
daß die Bandschleifeinheiten (35, 45, 46, 55) gegenüber einer Vertikalen eine Neigung um einen Winkel a von etwa 15° bis 30° aufweisen, wobei sie vorzugsweise mit ihren oberen Randbereichen entgegen zur Förderrichtung (18) geneigt sind.

19. Ziegelschleifvorrichtung nach einem der Ansprüche 1 bis 18,
**dadurch gekennzeichnet,**
daß die Bandschleifeinheiten (35, 45, 46, 55) mit einer Verstelleinheit versehen werden, mit welcher der Abstand zu den gegenüberliegend angeordneten Anschlägen (32, 48) selbsttätigt nachgestellt wird.

20. Ziegelschleifvorrichtung nach einem der Ansprüche 1 bis 19,
**dadurch gekennzeichnet,**
daß die den Bandschleifeinheiten (35, 45, 46, 55) gegenüberliegenden Anschläge jeweils ein Förderband aufweisen, wobei ein Trum des Förderbandes angrenzend neben der Transporteinrichtung (11) parallel zur Transporteinrichtung (11) verlaufend angeordnet und in Förderrichtung (18) antreibbar ist.

## Claims

1. Brick grinding device for the production of flat bricks, with at least two grinding stations (23, 24) each one comprising a belt grinding unit (35, 45, 46, 55) and an end-stop (32, 48), arranged at predetermined distances (D2, D3, D4) from one another so that a brick (1) can be introduced in the area between the end-stop (32, 48) and the belt grinder (35, 45, 46, 55) and ground over a width determined by the distances (D2, D3, D4), such that the two grinding stations (23, 24) are displaced in the movement direction (18) along a transport device (11) for bringing in bricks (1) and are arranged with their belt grinders (35, 45, 46, 55) on opposite sides of the transport device (11), whereby two opposite side surfaces (6, 7) of the brick (1) can be ground flat and parallel to one another.

2. Brick grinding device according to Claim 1, in which the belt grinding unit (46) has a grinding belt with particle size P40 or finer.

3. Brick grinding device according to Claims 1 or 2,
**characterised in that**
the second grinding station (24), which comes after the first grinding station in the movement direction (18), comprises two belt grinders (45, 46) such that the last belt grinder (46) along the movement direction (18) has a grinding belt (36) whose particle size is at least as fine as and preferably finer than the particle size of the grinding belts (36) of the other belt grinders (35, 45).

4. Brick grinding device according to any of Claims I to 3,
**characterised in that**
the first grinding station (23) comprises two belt grinders (35, 55) such that the belt grinder (55) further along the movement direction has a grinding belt whose particle size is finer than that of the grinding belt of the belt grinder (35) positioned earlier along the movement direction.

5. Brick grinding device according to Claim 4,
**characterised in that**
the second grinding station (24) comprises two belt grinders (45, 46) such that the belt grinders which come earlier in the first and second grinding stations (23, 24) and those which come later in the first and second grinding stations (23, 24) have, respectively, grinding belts with the same particle size.

6. Brick grinding device according to Claims 1 to 5,
**characterised in that**
the transport device (11) is formed of a lower and an upper endless conveyor belt (12, 13) each passing around guide rolls (15), such that the upper conveyor belt (13) is positioned parallel to and above the lower conveyor belt (12) and the lower (12) and upper (13) conveyor belts have respectively a lower and upper strip section (12a, 12b and 13a, 13b), and the upper strip section (12a) of the lower conveyor belt (12) and the lower strip section (13b) of the upper conveyor belt (13) both travel in the movement direction (18) and can be driven by a drive unit.

7. Brick grinding device according to Claim 6,
**characterised in that**
the lower strip section (13b) of the upper conveyor belt (13) is pressed downwards by press-pads (19), so that the lower strip section (13b) of the upper conveyor belt (13) cannot be deflected upwards.

8. Brick grinding device according to any of Claims 1 to 7,
**characterised in that**
the belt grinding units (35, 45, 46, 55) each comprise an endless grinding belt (36) which passes round a contact roll (37) adjacent to the transport device (11) and a guide roll (38), such that at least one of the two rolls (37, 38) can be driven so that the grinding belt (36) preferably travels against the movement direction (18) in the area of the contact roll (37).

9. Brick grinding device according to Claim 8,
**characterised in that**
the contact roll (37) is provided with an elastically yielding coating, in particular a rubber or plastic coating, whose thickness is approximately 5 mm to 20 mm.

10. Brick grinding device according to Claim 9,
**characterised in that**
the coating has a Shore hardness of 30 to 90 and preferably 55 to 75.

11. Brick grinding device according to any of Claims 8 to 10,
**characterised in that**
in the movement direction, before and immediately alongside the contact rolls (37), in each case a suction nozzle (40) is provided which comprises a slit-shaped mouth (41) directed parallel to the contact roll (37) and extending appropriately from the upper strip section (12a) of the lower conveyor belt (12) as far as the lower strip section (13b) of the upper conveyor belt (13).

12. Brick grinding device according to any of Claims 1 to 11,
**characterised in that**
on the transport device (11), along the movement direction (18), there are arranged in sequence a deposition section (21), a feed-in section (22), the first grinding station (23), the second grinding station (24), preferably a blower section (25) and a removal section (26).

13. Brick grinding device according to Claim 12,
**characterised in that**
the feed-in section (22) comprises a vertically arranged endless feed-in belt (30) passing around front and rear guide rolls (28, 29), and on the transport device (11) opposite the feed-in belt (30) is arranged a vertical slide plate (32) serving as an end-stop, the distance of the front guide roll (28) of the feed-in belt (30) from the slide plate (32) being somewhat greater than that of the rear guide roll (29), so that the distance between the feed-in belt and the slide plate (32) becomes narrower along the movement direction (18).

14. Brick grinding device according to Claim 13,
characterised in that
the slide plate (32) extends from the feed-in section (22) as far as the area of the first grinding station (23) and thus functions as an end-stop for the belt grinding unit (35) opposite it on the transport device (11).

15. Brick grinding device according to any of Claims 12 to 14,
**characterised in that**
a slide plate (48) serving as an end-stop is arranged on the transport device (11) opposite the belt grinders (45, 46) of the second grinding station, and the slide plate (48) extends from the second grinding station through the blower section (25) and as far as the removal section (26).

16. Brick grinding device according to Claim 15,
**characterised in that**
in the blower section (25) the slide plate (48) is perforated, and a fan blowing air transversely to the movement direction (18) is provided to remove grinding dust from the channels of the brick (1).

17. Brick grinding device according to any of Claims 1 to 16,
**characterised in that**
the belt grinders (35, 45, 46, 55) are formed such that the grinding belts (36) oscillate on the contact rolls (37) in the vertical direction.

18. Brick grinding device according to any of Claims 1 to 17,
**characterised in that**
the belt grinders (35, 45, 46, 55) are inclined at an angle a of about 15° to 30° with respect to the vertical, and their upper edge area is preferably inclined against the movement direction (18).

19. Brick grinding device according to any of Claims 1 to 18,
**characterised in that**
the belt grinders (35, 45, 46, 55) are provided with an adjustment unit with which the distance to the end-stops (32, 48) arranged opposite is automatically adjusted.

20. Brick grinding device according to any of Claims 1 to 19,
**characterised in that**
the end-stops opposite the belt grinders (35, 45, 46, 55) each comprise a conveyor belt, one strip section of which adjacent to the transport device (11) is positioned and runs parallel to the transport device (11) and can be driven in the movement direction (18).

## Revendications

1. Dispositif de meulage de briques pour la fabrication de briques planes, comportant au moins deux postes de meulage (23, 24) qui comprennent chacun une bande de meulage (35, 45, 46, 55) et une butée (32, 48), lesdits postes étant séparés par un écartement prédéterminé (D2, D3, D4), de sorte qu'une brique (1) puisse être introduite entre la butée (32,48) et la bande de meulage (35, 45, 46, 55), et qu'en raison des écartements (D2, D3, D4), ladite brique puisse être meulée sur une largeur prédéterminée, les postes de meulage (23, 24) étant décalés le long d'un dispositif de transport (11) afin d'acheminer la brique (1) dans la direction du transport (18) et étant placés avec leurs bandes de meulage (35, 45, 46, 55) de chaque côté du dispositif de transport (11), permettant ainsi à deux faces latérales opposées (6, 7) de la brique (1) d'être meulées en parallèle.

2. Dispositif de meulage de briques selon la revendication 1,
caractérisé en ce que la bande de meulage (46) comporte une bande abrasive ayant une granulation inférieure ou égale à P40.

3. Dispositif de meulage de briques selon la revendication 1 ou 2,
caractérisé en ce que le deuxième poste de meulage (24), qui est placé après le premier poste de meulage en se référant à la direction de transport (18), comporte deux bandes de meulage (45, 46), la bande de meulage (46) placée en second en se référant à la direction de transport (18) comporte une bande abrasive (36) ayant une granulation qui est au moins aussi fine, de préférence plus fine, que la granulation de la bande abrasive (36) des bandes de meulage (35, 45) restantes.

4. Dispositif de meulage de briques selon l'une quelconque des revendications 1 à 3,
caractérisé en ce que le premier poste de meulage (23) comporte deux bandes de meulage (35, 55), la bande de meulage (55) placée en second en référence à la direction du transport comprend une bande abrasive dont la granulation est plus fine que celle de la bande abrasive de la bande de meulage (35) placée en premier.

5. Dispositif de meulage de briques selon la revendication 4,
caractérisé en ce que le deuxième poste de meulage (24) comporte deux bandes de meulage (45, 46), les bandes abrasives placées en premier des premier et deuxième postes de meulage (23, 24) et les bandes abrasives placées en second des premier et deuxième postes de meulage (23, 24) présentant chacune des bandes abrasives ayant des granulations similaires.

6. Dispositif de meulage de briques selon l'une quelconque des revendications 1 à 5,
caractérisé en ce que le dispositif de transport (11) est composé d'une bande inférieure et d'une bande supérieure faisant partie de la même bande transporteuse sans fin (12, 13), qui sont introduites chacune dans un rouleau déflecteur (15), de telle sorte que la bande transporteuse supérieure (13) se trouve placée au-dessus de la bande transporteuse inférieure (12) et parallèlement à celle-ci, et que la bande transporteuse inférieure (12) et la bande transporteuse supérieure (13) présentent chacune une rainure inférieure et supérieure (12a, 12b respectivement 13a, 13b) et que la rainure supérieure (12a) de la bande transporteuse inférieure (12) et la rainure inférieure (13b) de la bande transporteuse supérieure (13) sont entraînées par un dispositif d'entraînement.

7. Dispositif de meulage de briques selon la revendication 6,
caractérisé en ce que la rainure inférieure (13b) de la bande transporteuse supérieure (13) est poussée vers le bas par un serre-flan (19) afin que la rainure inférieure (13b) de la bande transporteuse supérieure (13) ne puisse se déporter.

8. Dispositif de meulage de briques selon l'une quelconque des revendications 1 à 7, caractérisé en ce que les bandes de meulage (35, 45, 46, 55) comportent chacune une bande abrasive sans fin (36), qui s'enroule autour d'un galet de trolley (37) placé au voisinage du dispositif de transport (11) et autour d'un rouleau déflecteur (38), l'un au moins des deux rouleaux (37, 38) étant doté d'un mouvement d'entraînement tel que la bande abrasive (36), de préférence au voisinage du galet de trolley (37), subit un mouvement dont la direction est opposée à la direction du transport (18).

9. Dispositif de meulage de briques selon la revendication 8,
caractérisé en ce que le galet de trolley (37) est doté d'un revêtement élastique compressible, plus spécialement un revêtement synthétique ou en caoutchouc, dont l'épaisseur est comprise entre 5 et 20 mm environ.

10. Dispositif de meulage de briques selon la revendication 9,
caractérisé en ce que le revêtement présente une dureté comprise entre 30 et 90, de préférence entre 55 à 75.

11. Dispositif de meulage de briques selon l'une quelconque des revendications 8 à 10,
caractérisé en ce qu'une buse d'aspiration (40) est prévue chaque fois directement à côté du galet de trolley (37) dans la direction de transport, ladite buse comportant un orifice d'ouverture (41) qui est aligné parallèlement au galet de trolley (37) et s'étendant de façon fonctionnelle de la rainure supérieure (12a) de la bande transporteuse inférieure (12) à la rainure inférieure (13b) de la bande transporteuse supérieure (13).

12. Dispositif de meulage de briques selon l'une quelconque des revendications 1 à 11,
caractérisé en ce qu'au niveau du dispositif de transport (11) et dans la direction de transport (18) se trouvent placés consécutivement une zone de travail (21), une zone d'arrivage (22), le premier poste de meulage (23), le deuxième poste de meulage (24), ainsi qu'une zone de ventilation (25) et une zone de sortie (26) prévues de façon fonctionnelle.

13. Dispositif de meulage de briques selon la revendication 12,
caractérisé en ce que la zone d'arrivage (22) comporte une bande d'arrivage (30) sans fin, placée verticalement et qui s'enroule autour de rouleaux déflecteur (28, 29) avant et arrière, une plaque coulissante (32) verticale servant de butée est placée au niveau du dispositif de transport (11) à l'opposé de la bande d'arrivage (30), et le rouleau déflecteur avant (28) de la bande d'arrivage (30) est placé à une distance un peu plus grande de la plaque coulissante (32) que le rouleau déflecteur arrière (29), de telle sorte que la distance entre la bande d'arrivage et la plaque coulissante (32) se rétrécit dans la direction du transport (18).

14. Dispositif de meulage de briques selon la revendication 13,
caractérisé en ce que la plaque coulissante (32) s'étend de la zone d'arrivage (22) jusqu'au voisinage du premier poste de meulage (23) et à cet endroit, ladite plaque devenant une butée pour la bande de meulage (35) située en face et qui est placée au niveau du dispositif de transport (11).

15. Dispositif de meulage de briques selon l'une quelconque des revendications 12 à 14,
caractérisé en ce qu'une plaque coulissante (48) servant de butée est placée en face des bandes de meulage (45, 46) du deuxième poste de meulage du dispositif de transport (11), la plaque coulissante (48) s'étendant du deuxième poste de meulage jusqu'à la zone de sortie (26), en traversant la zone de ventilation (25).

16. Dispositif de meulage de briques selon la revendication 15,
caractérisé en ce que la plaque coulissante (48) est perforée dans la zone de ventilation (25), de sorte qu'une ventilation insufflant de l'air est prévue transversalement à la direction de transport (18) afin d'éloigner les poussières de meulage des canaux de la brique (1).

17. Dispositif de meulage de briques selon l'une quelconque des revendications 1 à 16,
caractérisé en ce que les bandes de meulage (35, 45, 46, 55) sont fabriquées de telle sorte que la bande abrasive (36) oscille verticalement au niveau du galet de trolley (37).

18. Dispositif de meulage de briques selon l'une quelconque des revendications 1 à 17,
caractérisé en ce que les bandes de meulage (35, 45, 46, 55) présentent une déclivité ayant un angle a compris entre 15° à 30 environ par rapport à la verticale, et que la région de leurs bords est inclinée de préférence dans une direction opposée à la direction de transport (18).

19. Dispositif de meulage de briques selon l'une quelconque des revendications 1 à 18,
caractérisé en ce que les bandes de meulage (35, 45, 46, 55) sont dotées d'un ajustage permettant de régler automatiquement la distance les séparant des butées (32, 48) placées en face.

20. Dispositif de meulage de briques selon l'une quelconque des revendications 1 à 19,
caractérisé en ce que les bandes de meulage (35, 45, 46, 55) faisant face aux butées comportent chacune une bande transporteuse, une rainure de la bande transporteuse est prévue pour s'enrouler près du dispositif de transport (11) parallèlement au dispositif de transport (11) et pour être entraînée dans la direction de transport (18).
